# EUROPÄISCHE PATENTANMELDUNG

(11) **EP 1 118 479 A1**
(43) Veröffentlichungstag der Anmeldung: **25.07.2001**
(21) Anmeldenummer: 00710041.5
(22) Anmeldetag: 13.12.2000
(51) Int. Cl.: B60G 7/02, B62D 21/11

(54) **Achsträger, insbesondere Vorderachsträger eines Kraftfahrzeuges**

(30) Priorität: 21.01.2000 DE 10002454
(71) Anmelder: Bayerische Motoren Werke Aktiengesellschaft, 80809 München (DE)
(72) Erfinder: Trzaska, Klaus, 86313 Friedberg (DE); Niklas, Johann, 85785 Haimhausen (DE); Rank, Joachim, 85777 Fahrenzhausen (DE); Perzlmaier, Rainer, 82256 Fürstenfeldbruck (DE); Manseicher, Josef, 85635 Höhenkirchen (DE); Drews, Reinhard, Dr., 80995 München (DE); Eiletz, Richard, Dr., 82008 Unterhaching (DE); Baumann, Bernd, Dr,, 56567 Neuwied (DE); Weiss, Berthold, 80999 München (DE)

(57) **Zusammenfassung**

Die Erfindung betrifft einen Achsträger (5), insbesondere Vorderachsträger eines Kraftfahrzeuges, an dem beidseitig jeweils über zumindest einen Lenker (6, 7) ein Radträger (8) angebunden ist, und der an verschiedenen Stellen der Fahrzeug-Karosserie befestigt ist, wobei die Befestigung an zumindest einer dieser Stellen fest und an zumindest einer anderen dieser Stellen elastisch ausgebildet ist. Bevorzugt ist der Achsträger (5) an zwei Stellen über Buchsen (1, 2) fest mit der Karosserie verschraubt und an zwei weiteren Stellen elastisch über Gummilager (3, 4) mit der Karosserie verbunden.

## Beschreibung

Die Erfindung betrifft einen Achsträger, insbesondere einen Vorderachsträger, eines Kraftfahrzeuges, an dem beidseitig jeweils über zumindest einen Lenker ein Radträger angebunden ist, und der an verschiedenen Stellen der Fahrzeug-Karosserie befestigt ist. Zum technischen Umfeld wird lediglich beispielshalber auf die DE 38 40 114 A1 verwiesen.

Stand der Technik sind Achsträger-Konstruktionen oder -Anordnungen, die entweder starr oder aber voll-elastisch mit der Karosserie des Fahrzeuges verbunden sind. Die letztgenannten, elastischen herkömmlichen Achsträger-Anordnungen sind zwar unter Akustik-Aspekten äußerst vorteilhaft, können jedoch aufgrund der elastischen Anbindung nichts zur Stabilität des Vorderbaus des Kraftfahrzeuges beitragen, so daß hierfür zusätzliche und dabei nachteiligerweise gewichtserhöhende Versteifungsmaßnahmen an der Karosserie vorgesehen werden müssen. Bei einer starren Anbindung des Achsträgers an der Karosserie hingegen wird zwar die Vorderwagensteifigkeit und somit das Crashverhalten des Kraftfahrzeuges verbessert, jedoch müssen hierfür akustische Nachteile in Kauf genommen werden, d.h. Abrollgeräusche und dgl. aus dem Fahrwerk werden ungedämpft in die Karosserie eingeleitet.

Einen im Hinblick auf diese Problematik verbesserten Achsträger aufzuzeigen, ist Aufgabe der vorliegenden Erfindung.

Die Lösung dieser Aufgabe ist dadurch gekennzeichnet, daß die Befestigung des an mehreren Stellen der Fahrzeug-Karosserie befestigten Achsträgers an zumindest einer dieser Stellen fest und an zumindest einer anderen dieser Stellen elastisch ausgebildet ist. In anderen Worten ausgedrückt kann die Anbindung bzw. Befestigung des Achsträger an der Fahrzeug-Karosserie somit als "teilelastisch" bezeichnet werden.

Eine derartige, sog. teilelastische Anordnung hat den Vorteil, daß einerseits die Voderwagensteifigkeit des Kraftfahrzeuges erhöht und somit dessen Crashverhalten verbessert wird. Gleichzeitig ist eine elastische Anbindung realisiert, aufgrund derer sich ein verbessertes akustisches Übertragungsverhalten einstellt. Dabei wird die elastische (und somit akustisch dämpfende) Verbindung bzw. Befestigung bevorzugt an solchen Stellen eingesetzt, an denen der akustische Übertragungspfad besonders kritisch ist. Dies betrifft sowohl die über die Räder des Fahrzeuges eingeleiteten Straßenanregungen als auch die über die auf dem Achsträger angeordnete Antriebsmaschinen-Lagerung eingeleiteten Schwingungen der Kfz-Antriebsmaschine, insbesondere Brennkraftmaschine.

In einer konstruktiv besonders vorteilhaften Ausführungsform ist der Achsträger an zwei Stellen über Buchsen fest mit der Karosserie verschraubt und an zwei weiteren Stellen elastisch über Gummilager mit der Karosserie verbunden, wie auch aus der beigefügten und im folgenden erläuterten Prinzipskizze eines bevorzugten Ausführungsbeispieles hervorgeht.

Mit der Bezugsziffer 9 ist die Mitten-Längsachse eines Kraftfahrzeuges, insbesondere vierrädrigen Personenkraftwagens bezeichnet, von welchem hier lediglich das rechte Vorderrad 8 bzw. dessen Radträger 8 dargestellt ist. Über hier zwei Lenker 6 und 7 ist dieser Radträger 8 an einem Achsträger 5 angebunden. Dieser im wesentlichen U-förmige Achsträger 5 ist linksseitig sowie rechtsseitig der Mitten-Längsachse 9 jeweils an zwei Stellen an der nicht dargestellten Karosserie des Kraftfahrzeuges befestigt, wobei darauf hingewiesen sei, daß selbstverständlich linksseitig der Mitten-Längsachse 9 ebenfalls ein Rad in gleicher Weise wie rechtsseitig angebunden ist.

Dieser zur Aufnahme von einem oder hier mehreren Lenkern 6, 7 vorgesehene und somit der Führung des Rades/Radträgers 8 dienende Achsträger 5 stellt somit ein Zwischenglied zwischen dem Rad 8 und der Fahrzeug-Karosserie dar. Dieser Achsträger ist nun, wie weiter oben bereits erläutert wurde, teilelastisch mit der (nicht gezeigten) Karosserie verbunden. Dabei ist er über Buchsen 1, 2 zu einem Teil fest mit der Karosserie verschraubt. An zwei anderen Stellen ist er zum anderen Teil elastisch über Gummilager 3, 4 mit der Karosserie verbunden.

Bei geeigneter Auswahl der jeweiligen Befestigungsstellen für die Buchsen 1, 2 einerseits sowie für die Gummilager 3, 4 andererseits können beide grundsätzlich vorhandene Vorteile genutzt werden, nämlich eine Versteifung der Karosserie in diesem Bereich, ohne dabei eine unzumutbar hohe Körperschall-Einleitung in Kauf nehmen zu müssen. Dabei sei darauf hingewiesen, daß selbstverständlich eine Vielzahl von Details insbesondere konstruktiver Art durchaus abweichend vom gezeigten Ausführungsbeispiel gestaltet sein kann, ohne den Inhalt der Patentansprüche zu verlassen.

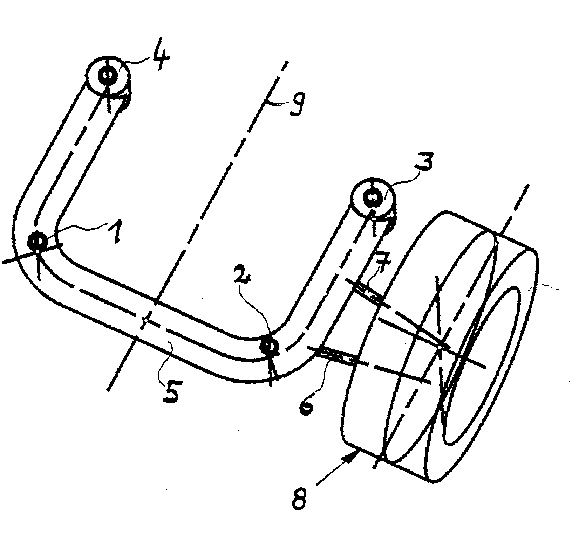

## Patentansprüche

1. Achsträger (5), insbesondere Vorderachsträger eines Kraftfahrzeuges, an dem beidseitig jeweils über zumindest einen Lenker (6, 7) ein Radträger (8) angebunden ist, und der an verschiedenen Stellen der Fahrzeug-Karosserie befestigt ist, wobei die Befestigung an zumindest einer dieser Stellen fest und an zumindest einer anderen dieser Stellen elastisch ausgebildet ist.

2. Achsträger nach Anspruch 1,
dadurch gekennzeichnet, daß er an zwei Stellen über Buchsen (1, 2) fest mit der Karosserie verschraubt und an zwei weiteren Stellen elastisch über Gummilager (3, 4) mit der Karosserie verbunden ist.
